# EUROPEAN PATENT SPECIFICATION

(11) **EP 1 726 752 B1**
(45) Date of publication and mention of the grant of the patent: **20.09.2017**
(21) Application number: 05704269.9
(22) Date of filing: 28.01.2005
(51) Int. Cl.: E05B 65/10, B61K 13/04, B60R 11/00, B60R 11/06, B61D 37/00

(54) **EMERGENCY TOOL CONTAINER**
NOTWERKZEUGBEHÄLTER
BOÎTE À OUTIL D'URGENCE

(30) Priority: 02.02.2004 JP 2004025816
(43) Date of publication of application: 29.11.2006
(73) Proprietor: Japan Transport Engineering Company, Kanagawa 236-0043 (JP)
(72) Inventor: SUZUKI, Hisao; c/o TOKYU CAR CORPORATION, Yokohama-shi, Kanagawa 2360043 (JP)
(74) Representative: Grünecker Patent- und Rechtsanwälte PartG mbB
(86) International application number: PCT/JP2005/001271
(87) International publication number: WO 2005/073490

(56) References cited:
- EP-A1- 0 696 528
- WO-A1-03/035180
- FR-A1- 2 746 019
- JP-A- 2000 289 761
- JP-B2- 2 585 184
- JP-U- 3 005 743
- JP-U- 3 021 504
- JP-U- 3 021 689
- JP-U- 49 098 000
- JP-U- 55 166 260
- US-A- 3 067 822

## Description

### Technical Field

The present invention relates to an emergency tool container for accommodating an emergency tool.

### Background Art

Generally, railway vehicles have various emergency equipment for an emergency case. For example, an emergency call unit by which a passenger reports occurrence of an emergency to crew members, lighting equipment to ensure required brightness in a vehicle even at an emergency, and fire alarm equipment for detecting and reporting occurrence of a fire in a vehicle. Moreover, a fire extinguisher or the like are equipped as emergency tools in a container space such as a side frame of a vehicle. Also, in foreign countries, there are railway vehicles equipped with a hammer as an emergency tool for breaking a window pane at emergency evacuation. Such background art is described in Japanese Utility Model Registration No. 3011173, for example.

JP 2000 289761 A discloses the features of the preamble of claim 1.

### Disclosure of the Invention

These emergency tools should be used only at an emergency but there were occasions when an operation lever of a container accommodating the emergency tool was unnecessarily operated by a passenger and an opening/closing cover was easily opened.

The present invention was made to solve the above problems and has an object to provide an emergency tool container whose opening/closing cover is hardly opened even when an operation lever is unnecessarily operated.

The emergency tool container according to the present invention is an emergency tool container for accommodating an emergency tool and comprises an opening/closing cover fixed to a first rotating shaft, an operation lever interlocked with the first rotating shaft, and an interlocking mechanism for blocking rotation of the first rotating shaft thereby preventing opening of said cover till an operation amount of the operation lever reaches a predetermined amount.

According to the emergency tool container, even when the operation lever is unnecessarily operated, as long as the operation lever is not operated exceeding the predetermined amount, the first rotating shaft is prevented from rotating by the interlocking mechanism, and the opening/closing cover is not opened. Therefore, even when the operation lever is unnecessarily operated, the opening/closing cover is hardly opened.

Preferably, the interlocking mechanism has: a fan-shaped cam fixed to a second rotating shaft extending from the operation lever and having an arc-shaped cam profile formed substantially concentrically with the axis of the second rotating shaft; and a cam follower fixed to the first rotating shaft and following the cam in sliding contact with the cam profile of the cam. By using such an interlocking mechanism, while the second shaft is rotated by the operation lever and the cam follower is in sliding contact with the arc-shaped cam profile of the cam, an attitude of the cam follower is maintained by the cam. Therefore, rotation of the first rotating shaft fixed to the cam follower is blocked, and the opening/closing cover is not opened. Moreover, when the operation lever is rotated till the cam follower is not in sliding contact with the cam profile of the cam any more, the cam follower is detached from the cam, and the cam follower loses a target to follow, by which the first rotating shaft fixed to the cam follower is released from the cam. In this way, even when the operation lever is unnecessarily operated, as long as the cam follower is in sliding contact with the arc-shaped cam profile of the cam, the opening/closing cover is not opened.

Moreover, the emergency tool container preferably comprises a locking mechanism having a stopper portion fixed to the second rotating shaft, and a latch portion with a tip end portion arranged in a rotational movement range of the stopper portion and urged capable of being pushed back toward the second rotating shaft. By employing such a locking mechanism, when the operation lever is operated and the second rotating shaft is rotated, the stopper portion rotating with rotation of the second rotating shaft pushes back the latch portion against the urging force and the stop portion finally passes the latch portion. When the stopper portion has passed the latch portion, the latch portion is not pressed any more and returned. As a result, even when the operation lever is to be rotated backward, the stopper portion is kept from reverse rotation by the latch portion and can not be returned to the state before rotating the operation lever. In this way, once the opening/closing cover is opened, even when the operation lever is unnecessarily operated, the opening/closing cover can not be returned but the opening/closing cover is kept open, by which an evidence that the opening/closing cover has been opened can be left.

Also, it is more preferable to provide a lock release mechanism, which includes: a third rotating shaft with a wrench insertion slot formed at the tip end; a first arm fixed to the third rotating shaft and projecting in a perpendicular direction to the axis of the third rotating shaft; and a second arm fixed to the latch portion so as to abut against the first arm in a rotational movement range of the first arm, and pressed by the first arm which rotates with the rotation of the third rotating shaft to push back the latch portion. The lock release mechanism is used to release the state where the stopper portion is locked by the latch portion in the locking mechanism. That is, to release the lock state, when a wrench is inserted in the wrench insertion slot and the wrench is rotated, the third rotating shaft and the first arm are rotated. This first arm keeps on pressing the second arm even after being abutted against the second arm, and the latch portion fixed to the second arm is also pushed back against the urging force. When the latch portion is pushed back in this way, there is nothing to block the backward rotation of the stopper portion any more, by which the stopper portion can be rotated backward and the lock state of the locking mechanism is released. Since the lock release mechanism requires a wrench, releasing of the lock state by a person without a wrench is precluded, and an evidence that the opening/closing cover was opened can not be concealed.

Furthermore, in such an emergency tool container, it is preferable to provide a detecting means for detecting that an operation amount of the operation lever has reached a predetermined amount. By this detecting means, even when the opening/closing cover is unnecessarily opened, the fact that the opening/closing cover was opened can be detected. Moreover, if a warning is issued based on a detection signal outputted by the detecting means, the fact that the opening/closing cover was opened can be easily recognized by a passenger or crew members.

Also, the opening/closing cover may have a size to partially cover an emergency tool. In this case, since the emergency tool is partially exposed from the opening/closing cover, users can easily check what emergency tool is accommodated in the emergency tool container, which improves visibility of the emergency tool. Therefore, the emergency tool can be rapidly used at emergency.

### Brief Description of the Drawings

Fig. 1 is a sectional view of a railway vehicle in which an emergency tool container according to the present invention is placed;
Fig. 2 is a front view of the emergency tool container shown in Fig. 1;
Fig. 3 is a perspective view of the emergency tool container shown in Fig. 2;
Fig. 4 is a front view of the emergency tool container showing a state where a cabinet is removed from the emergency tool container shown in Fig. 2;
Fig. 5 is a back view of the emergency tool container shown in Fig. 3;
Fig. 6 is a perspective view showing a state of the emergency tool container after an opening/closing cover is opened;
Fig. 7 is a perspective view showing a state where a second rotating shaft is rotated;
Fig. 8 is a front view showing a locking mechanism applied to the emergency tool container;
Fig. 9 is a side view showing a lock release mechanism applied to the emergency tool container;
Fig. 10 is a plan view showing a lock release mechanism applied to the emergency tool container;
Fig. 11 is a front view showing an operation lever, cam, and cam follower before the operation lever is operated;
Fig. 12 is a front view showing a state of the locking mechanism and the lock release mechanism before the operation lever is operated;
Fig. 13 is a front view showing a state of a detection mechanism before the operation lever is operated;
Fig. 14 is a front view showing a state of the operation lever, cam, and cam follower when the operation lever is rotated clockwise by 87 degrees;
Fig. 15 is a front view showing a state of the locking mechanism and the lock release mechanism when the operation lever is rotated clockwise by 87 degrees;
Fig. 16 is a front view showing a state of the detection mechanism when the operation lever is rotated clockwise by 87 degrees;
Fig. 17 is a front view showing a state of the operation lever, cam, and cam follower when the operation lever is rotated clockwise by 90 degrees;
Fig. 18 is a front view showing a state of the locking mechanism and the lock release mechanism when the operation lever is rotated clockwise by 90 degrees;
Fig. 19 is a front view showing a state of the detection mechanism when the operation lever is rotated clockwise by 90 degrees;
Fig. 20 is a front view showing a state where a head of a wrench is inserted through a wrench insertion slot when the operation lever is operated and the opening/closing cover is opened;
Fig. 21 is a front view showing a state of the lock release mechanism when the head of the wrench is inserted through the wrench insertion slot and the wrench is rotated counterclockwise;

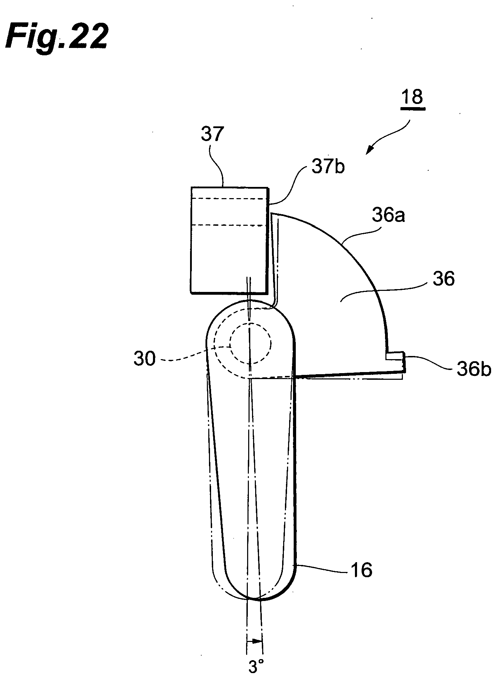

Fig. 22 is a front view showing a state of the operation lever, cam, and cam follower when the head of the wrench is inserted in the wrench insertion slot and the wrench is rotated counterclockwise;
Fig. 23 is a front view showing a state of the detection mechanism when the head of the wrench is inserted through the wrench insertion slot and the wrench is rotated counterclockwise; and
Fig. 24 is a front view showing a state of the operation lever, cam and cam follower when the head of the wrench is inserted in the wrench insertion slot, the wrench is rotated counterclockwise and the opening/closing over is closed.

### Best Modes for Carrying Out the Invention

A preferred embodiment of an emergency tool container 1 according to the present invention will be described below in detail referring to the attached drawings.

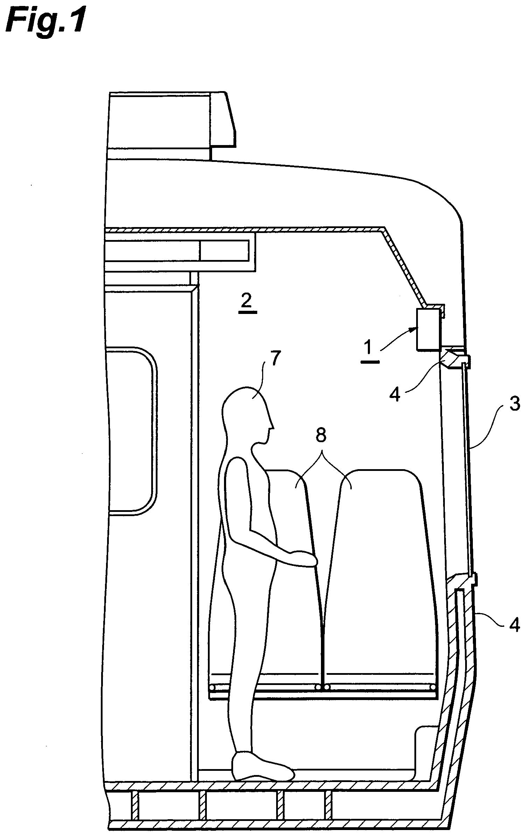

As shown in Fig. 1, the emergency tool container 1 is placed laterally on a side frame 4 in an upper part of a window portion 3 in a railway vehicle 2. The emergency tool container 1 is installed at a position with such a height that a passenger 7 can reach and where a chair 8 does not get in the way of operation.

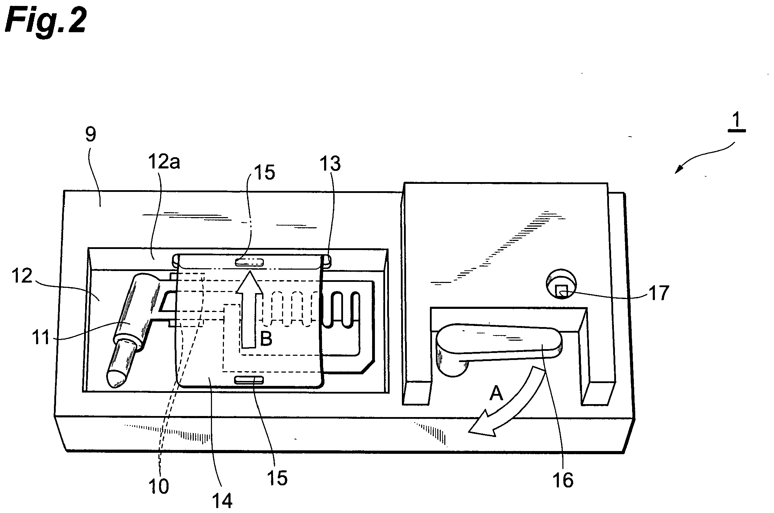

Also, as shown in Fig. 2, a containing portion 12 in a rectangular shape for accommodating a hammer 11, which is an emergency tool, is formed in a metal cabinet 9 of the emergency tool container 1, and a bracket 10 made of resin for holding a neck portion of the hammer 11 is provided on a bottom face of the containing portion 12. The hammer 11 is used by the passenger 7 and at an emergency, the hammer 11 is removed from the bracket 10 and used by the passenger 7 to crush the window portion 3 and the like to escape from the vehicle 2.

An opening/closing cover 14 goes into and comes out from an elongated hole 13 formed on a side wall face 12a of the containing portion 12, and the hammer 11 is covered by the opening/closing cover 14. Since the opening/closing cover 14 has a width partially covering the hammer 11, the hammer 11 is partially seen as exposed from the opening/closing cover 14. Therefore, the fact that the emergency tool accommodated in the emergency tool container 1 is the hammer 11 is known by the passenger 7 at a glance, and visibility of the hammer 11 is good. Thus, at an emergency, the passenger 7 can rapidly use the hammer 11. However, when the hammer 11 is covered by the opening/closing cover 14, the opening/closing cover 14 has a sufficient width that the hammer 11 can not be removed from the containing portion 12. Moreover, a knob hole 15 of the size to be pinched by fingers is formed at the center on an end portion of the opening/closing cover 14.

An operation lever 16 is provided at the emergency tool container 1, and the opening/closing cover 14 is interlocked with the operation lever 16. That is, when the operation lever 16 is rotated clockwise by about 90 degrees as shown by an arrow A, the opening/closing cover 14 is withdrawn, as shown by an arrow B and a phantom line, through a hole 13 into the cabinet 9 so that the hammer 11 can be taken out. Also, once the opening/closing cover 14 is opened, the operation lever 16 is brought into a lock state so that it can not be returned by the passenger 7 to an original state. And a wrench insertion slot 17 is to release the lock state, and by inserting a special wrench into the wrench insertion slot 17 and operating, the lock state is released.

Next, a structure inside the emergency tool container 1 will be described.

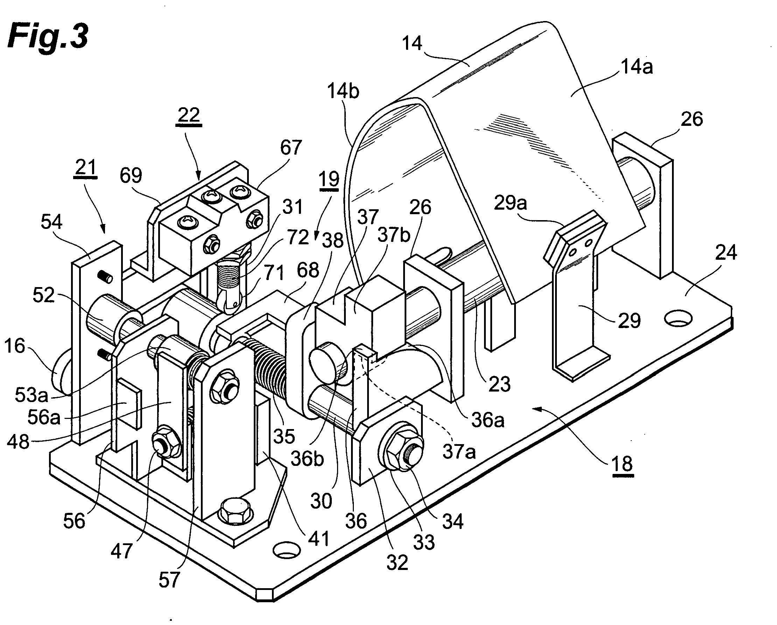

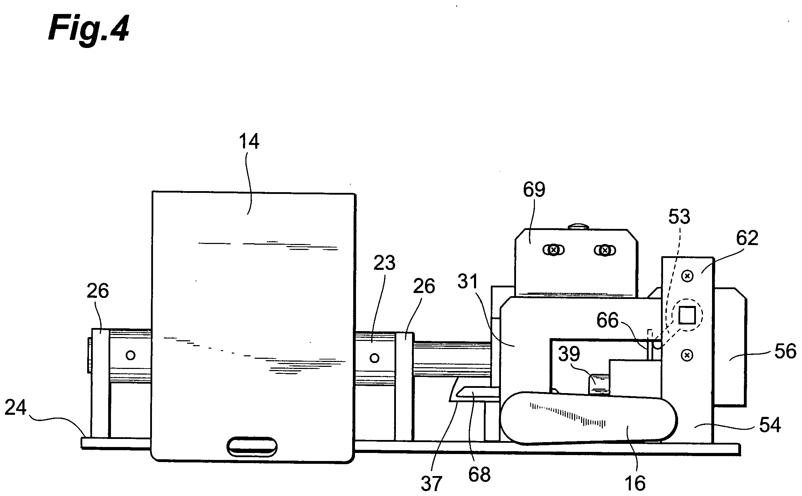

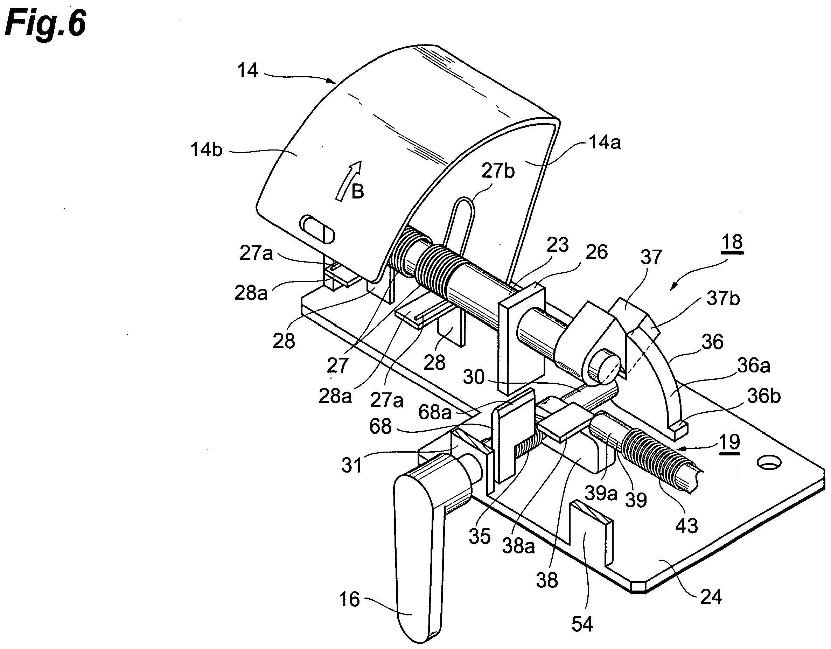

Figs. 3 to 5 show an internal structure of the emergency tool container 1 with the opening/closing cover 14 closed and the cabinet 9 removed. Fig. 6 shows an internal structure of the emergency tool container 1 when the opening/closing cover 14 is opened.

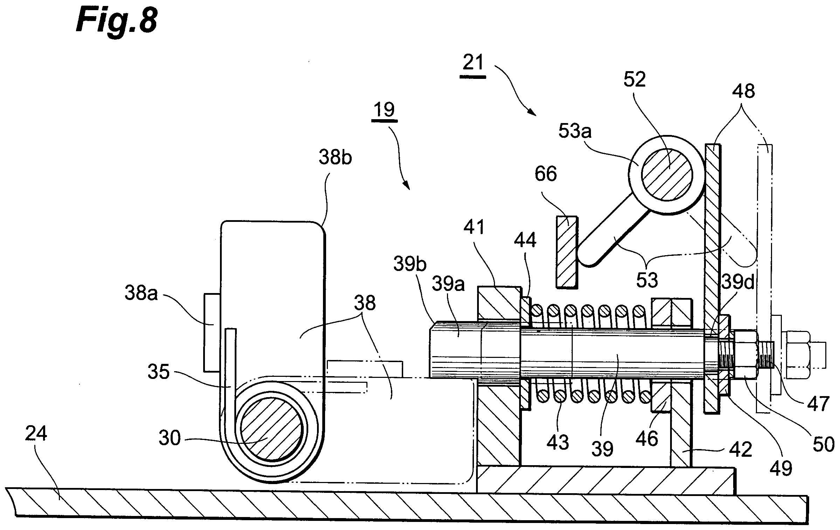

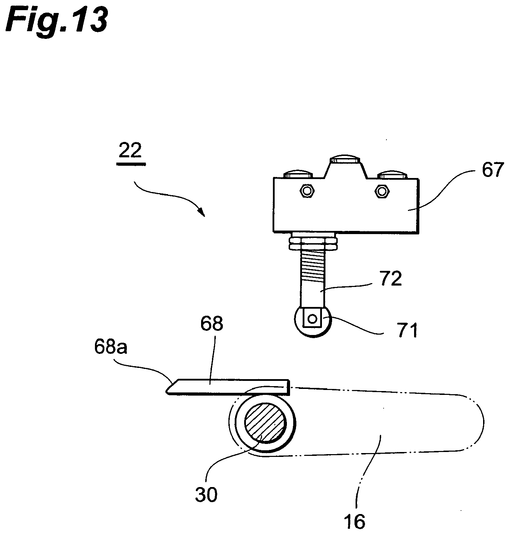

As shown in Fig. 3, the cabinet 9 accommodates an interlocking mechanism 18 for interlocking the operation lever 16 with the opening/closing cover 14, a locking mechanism 19 for locking the operation lever 16 in the state where the opening/closing cover 14 is opened (See Fig. 8), a lock release mechanism 21 for releasing the lock state by the locking mechanism 19 (See Fig. 8), and a detection mechanism (detecting means) 22 for detecting that the opening/closing cover 14 was opened (See Fig. 13).

First, the interlocking mechanism 18 for interlocking the opening/closing cover 14 with the operation lever 1 will be described.

As shown in Fig. 3, the opening/closing cover 14 has a flat portion 14a and a curved portion 14b, and an end of the flat portion 14a is fixed tangentially with respect to a first rotating shaft 23. The center line of the curved portion 14b substantially matches the axis of the first rotating shaft 23. The first rotating shaft 23 is rotatably supported by a pair of shaft holding plates 26, 26 fixed to a base plate 24. Also, as shown in Fig. 6, a torsion spring 27 is placed at the center of the first rotating shaft 23, and both ends 27a, 27a of the torsion spring 27 are set on upper faces 28a of a pair of L-shaped fittings 28 stood on the base plate 24, respectively. Moreover, at the center of the torsion spring 27, a tongue portion 27b formed by drawing out one part of the spring in the U-shaped is provided, and the tongue portion 27b is brought into contact with an inner surface of the flat portion 14a of the opening/closing cover 14. By this constitution, the opening/closing cover 14 is urged in a direction of being opened by the torsion spring 27 (arrow B direction in Figs. 2 and 6).

Also, as shown in Fig. 3, a cover supporting body 29 with a tip end portion bent in the V-shape is set up at the rear of the flat portion 14a on the base plate 24. And at a tip end portion of the cover supporting body 29, an elastic body 29a is mounted which is brought into contact with the flat portion 14a when the opening/closing cover 14 is rotated and opened to block rotation of the opening/closing cover 14.

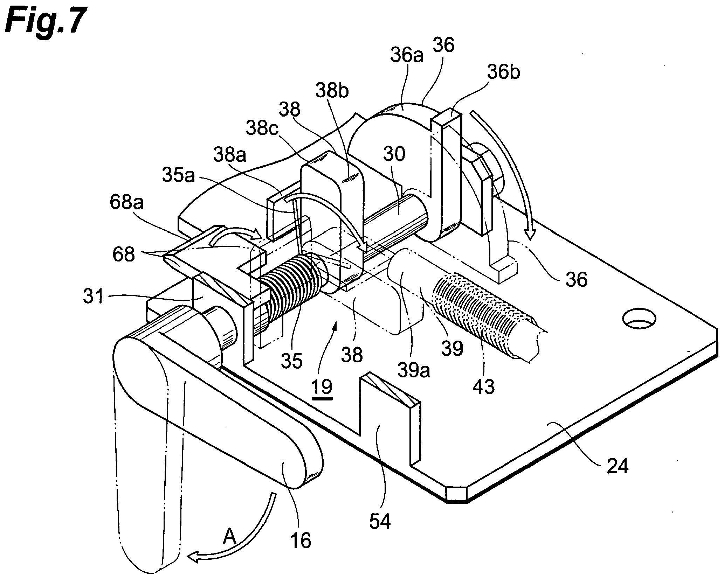

Moreover, a second rotating shaft 30 is fixed to the operation lever 16, and the second rotating shaft 30 is arranged substantially perpendicularly to the first rotating shaft 23 and rotatably supported by a pair of shaft holding plates 31, 32. At an end of the second rotating shaft 30, a washer 33 is fitted from the outside of the shaft holding plate 32, and a nut 34 is further screwed. Thus, the operation lever 16 is prevented from being removed along with the second rotating shaft 30. In addition, a torsion spring 35 is attached to the second rotating shaft 30. As shown in Fig. 7, one end 35a of the torsion spring 35 is brought into contact with a tongue piece 38a of a stopper portion 38 integrally fixed to the second rotating shaft 30, while the other end (not shown) is fixed to the base plate 24. The second rotating shaft 30 is urged by the torsion spring 35 counterclockwise when seen from the operation lever 16 side.

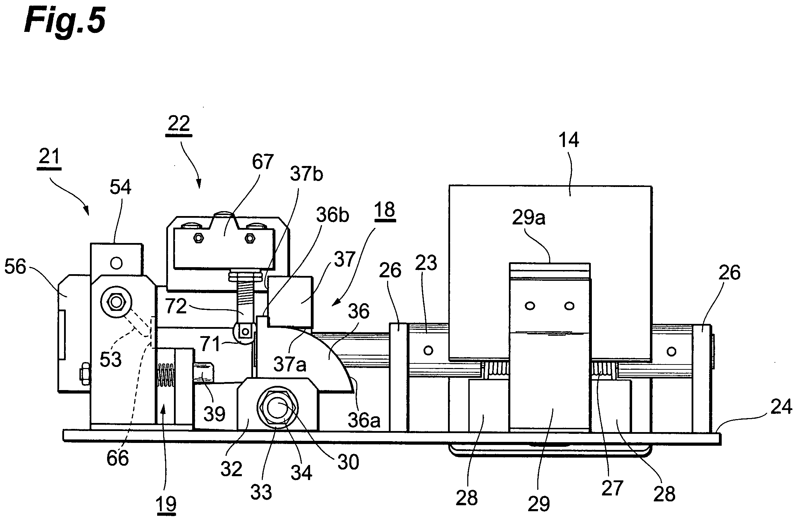

Furthermore, as shown in Figs. 3 and 6, in the interlocking mechanism 18 for interlocking the first rotating shaft 23 with the second rotating shaft 30, a fan-shaped cam 36 is fixed to a free end of the second rotating shaft 30, while a crank-shaped and block-shaped cam follower 37 following the cam 36 is fixed to a free end of the first rotating shaft 23. The cam 36 has an arc-shaped cam profile 36a, and at an end of the cam profile 36a, a stopper portion 36b for restricting a movable range of the cam 36 is projected in the radial direction. As shown in Fig. 5, the cam follower surface 37a projecting from the first rotating shaft 23 is in sliding contact on the cam profile 36a. In this way, the operation lever 16 is connected to the first rotating shaft 23 through the second rotating shaft 30, the cam 36 and the cam follower 37. Moreover, an engaging surface 37b extending in a perpendicular direction to the axis of the first rotating shaft 23 is formed on the cam follower 37 at the free end side of the first rotating shaft 23, and the engaging surface 37b abuts against the above-mentioned stopper portion 36b.

Next, the locking mechanism 19 will be described. As shown in Fig. 7, the locking mechanism 19 comprises the block-shaped stopper portion 38 fixed to the second rotating shaft 30 and a latch portion 39 for locking the stopper portion 38. The stopper portion 38 projects substantially perpendicularly to the axis of the second rotating shaft 30. At the tip end portion of the stopper portion 38, an edge portion 38b on the latch portion 39 side is chamfered.

On the other hand, the latch portion 39 is arranged in parallel with respect to the base plate 24, and a tip end portion 39a of the latch portion 39 is arranged horizontally directing the second rotating shaft 30 so that it is located within a rotational movement range of the stopper portion 38. As shown in Fig. 8, a slant portion 39b is formed at an upper edge portion of the tip end portion 39a. The latch portion 39 passes through a pair of latch support portions 41, 42 set up on the base plate 24, and the latch portion 39 is held by the latch support portions 41, 42. Between these latch support portions 41, 42, a spring stopper plate 44 abutting against the front latch support portion 41 is fixed to the latch portion 39, a spring receiving plate 46 is fit to the rear end of the latch portion 39, and a compression spring 43 is interposed between the spring stopper plate 44 and the spring receiving plate 46. Therefore, the latch portion 39 can be continuously urged by the compression spring 43.

At the rear end of the latch portion 39, a small-diameter bolt 47 is formed. At a stepped portion 39d formed between a barrel portion of the latch portion 39 and the small-diameter bolt 47, an arm (second arm) 48 is mounted. The arm 48 projects substantially perpendicularly to the axis of the latch portion 39. The arm 48 is fixed to a base end of the latch portion 39 by screwing a nut 50 with the small-diameter bolt 47 via washer 49. By this constitution, the latch portion 39 is urged by the compression spring 43 toward the second rotating shaft 30. Note that an urging means of the latch portion 39 is the compression spring 43, and therefore it is possible to push back the latch portion 39 against an urging force.

Moreover, the lock release mechanism 21 comprises a third rotating shaft 52 arranged in parallel with the second rotating shaft 30 above the latch portion 39, an arm (first arm) 53 fixed to and projecting from the third rotating shaft 52 in the radial direction and the arm (second arm) 48 fixed to the latch portion 39.

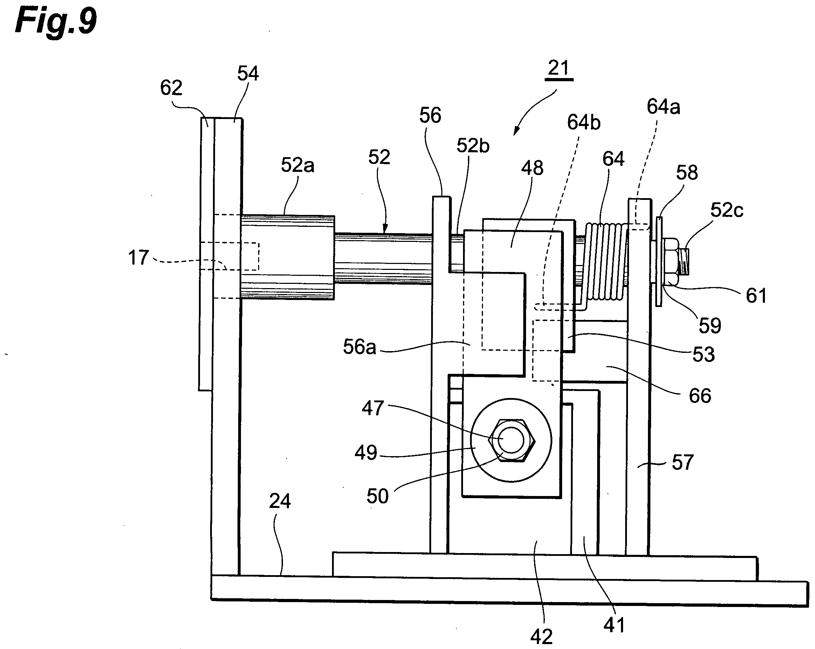

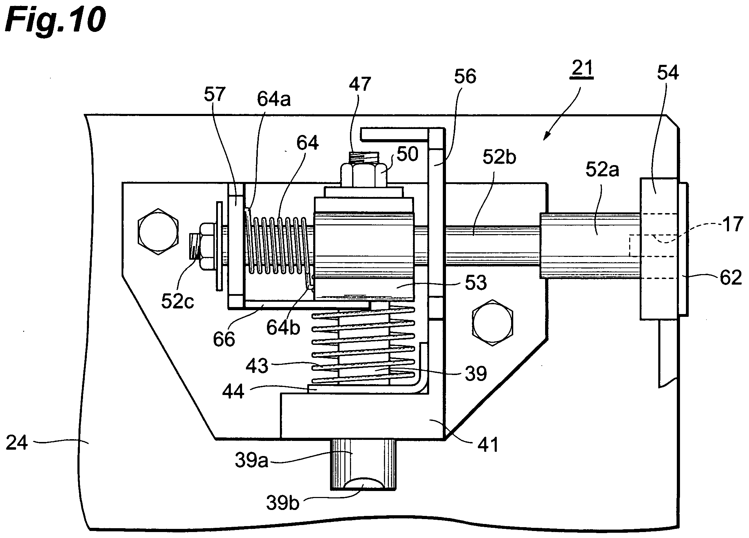

As shown in Figs. 9 and 10, a tip end portion 52a, a barrel portion 52b and a rear end portion 52c of the third rotating shaft 52 are rotatably supported by shaft holding plates 54, 56, 57, respectively, set up on the base plate 24. A bolt portion is formed at the rear end portion 52c of the third rotating shaft 52. To this bolt portion 52c, washers 58, 59 are set, and a nut 61 is further screwed. Here, since a small clearance is provided between the washer 58 and the shaft holding plate 57, the third rotating shaft 52 is capable of rotating. Also, the arm 48 is pushed out to the shaft holding plate 56 by the arm 53 rotating with rotation of the third rotating shaft 52. On the central shaft holding plate 56, a stopper plate 56a for restricting backward movement of the arm 48 is formed in parallel with respect to the arm 48.

Furthermore, on the shaft holding plate 54, a cover 62 having a hole 62a is fixed by a screw so as to cover an end face of the tip end portion 52a of the third rotating shaft 52. Moreover, at the tip end portion 52a of the third rotating shaft 52, the wrench insertion slot 17 is formed so that a special wrench can be fitted in the wrench insertion slot 17 through the hole 62a of the cover 62.

As shown in Figs. 8 and 9, an attachment ring 53a is integrally formed on the arm 53, and the attachment ring 53a is attached and fixed to the barrel portion 52b of the third rotating shaft 52. The arm 53 is projecting in a perpendicular direction to the axis of the third rotating shaft 52. Moreover, a torsion spring 64 is mounted to the third rotating shaft 52, and one end 64a of the torsion spring 64 is fixed to the shaft holding plate 57, while the other end 64b is abutted against the arm 53. Therefore, the third rotating shaft 52 is urged by the torsion spring 64 clockwise when seen from the operation lever 16 side. However, since the arm 53 is abutted against a stopper portion 66 projected from the shaft holding plate 57 substantially perpendicularly to the axis of the third rotating shaft 52, clockwise rotation of the third rotating shaft 52 is restricted. Also, the arm 48 fixed to the rear end of the latch portion 39 is arranged to be abutted within a rotational movement range of the arm 53.

Moreover, as shown in Fig. 3, the detection mechanism (detecting means) 22 comprises a limit switch 67 and an operating plate 68 fixed to the second rotating shaft 30. The limit switch 67 is fixed to a mounting base 69 integrally formed with the shaft holding plate 31. From a lower face of the limit switch 67, a follower body 72 having a roller 71 is projected. The limit switch 67 is a device for detecting that the roller 71 is pressed upward through the follower body 72. As shown in Fig. 7, the operating plate 68 is fixed to the second rotating shaft 30, and a tip end portion 68a of the operating plate 68 is inclined. The operating plate 68 is fixed to the second rotating shaft 30 so that, when the operation lever 16 is rotated, the operating plate 68 is rotated together with the second rotating shaft 30, and the inclined surface of the tip end portion 68a is abutted against the roller 71 of the limit switch 67. The railway vehicle 2 is equipped with an electric system for transmitting an output of the limit switch 67 shown in Fig. 3 to a crew compartment.

Next, operation of the emergency tool container 1 will be described.

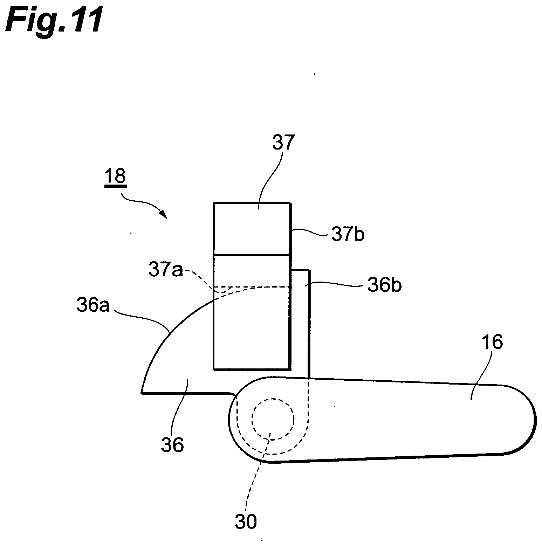

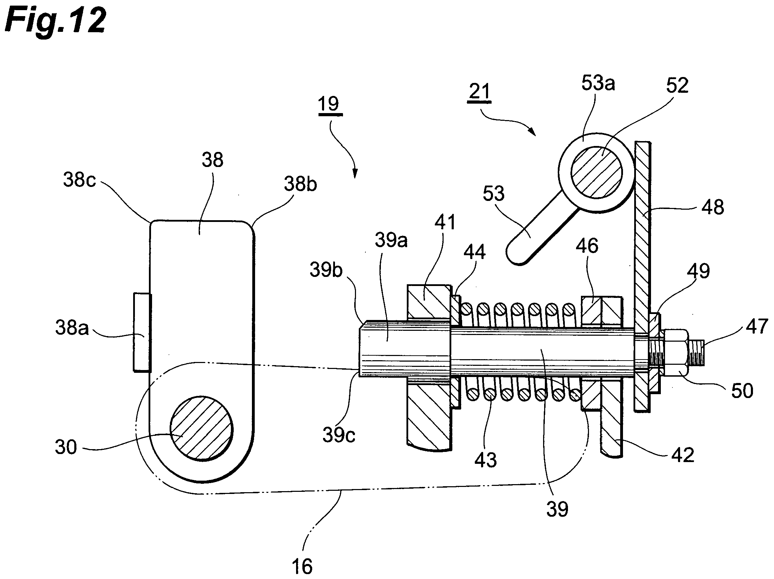

As shown in Fig. 11, before the operation lever 16 is rotated, the operation lever 16 extends horizontally, the engaging surface 37b of the cam follower 37 is abutted against the cam profile 36a of the cam 36, and the stopper portion 36b of the cam 36 is abutted against the engaging surface 37b of the cam follower 37. At this time, as shown in Fig. 12, the stopper portion 38 fixed to the second rotating shaft 30 is in a state of standing vertically. The latch portion 39 is urged by the compression spring 43 toward the second rotating shaft 30, but since the arm 48 is abutted against the attachment ring 53a, the latch portion 39 is stationary. Also, as shown in Fig. 13, the operating plate 68 fixed to the second rotating shaft 30 extends horizontally and is not in contact with the roller 71 of the limit switch 67.

In this state, as shown in Figs. 2 and 7, the operation lever 16 is rotated clockwise (arrow A direction). At this time, since the cam follower surface 37a of the cam follower 37 is in sliding contact with the arc-shaped cam profile 36a of the cam 36 within the rotating angle of 87 degrees, the attitude of the cam follower 37 is maintained by the cam 36. Therefore, rotation of the first rotating shaft 23 fixed to the cam follower 37 is blocked, and the opening/closing cover 14 is not opened.

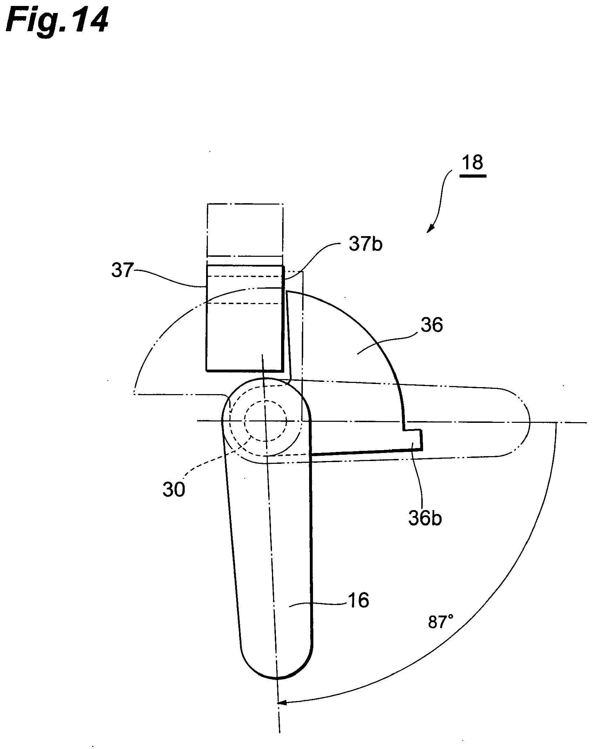

As shown in Fig. 14, when the operation lever 16 is further rotated clockwise and the rotation angle reaches 87 degrees, the cam follower surface 37a of the cam follower 37 is not in sliding contact with the cam profile 36a of the cam 36 any more, and the cam follower 37 is disengaged from the cam 36. Then, the cam follower 37 loses a target to follow, and the first rotating shaft 23 fixed to the cam follower 37 is released from the cam 36. Then, the first rotating shaft 23 is rotated by urging of the torsion spring 27 (See Fig. 6), and the opening/closing cover 14 is opened. At this time as shown by a phantom line in Fig. 2, the opening/closing cover 14 slightly protrudes from the hole 13 to such an extent that the knob hole 15 can be pinched.

As can be understood from the above operation state, even if the operation lever 16 is unnecessarily operated, the cam follower 37 is in sliding contact with the arc-shaped cam profile 36a of the cam 36 till the rotation angle of the operation lever 16 reaches 87 degrees, and the opening/closing cover 14 is not opened. Therefore, even if the operation lever 16 is unnecessarily operated, the opening/closing cover 14 is hardly opened.

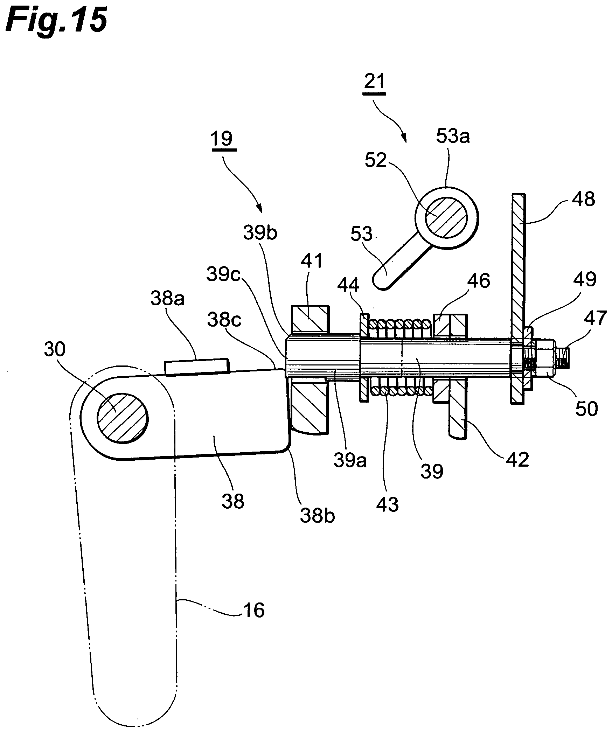

While the operation lever 16 is being rotated clockwise from the state shown in Fig. 12, the stopper portion 38 is rotated with the second rotating shaft 30, and the chamfered edge portion 38b of the stopper portion 38 is abutted against the slant portion 39b of the latch portion 39. Moreover, since the operation lever 16 further keeps on rotating clockwise, the stopper portion 38 pushes back the latch portion 39 against the urging force of the compression spring 43 while the edge portion 38b is in sliding contact with the slant portion 39b. As shown in Fig. 15, when the rotation angle of the operation lever 16 comes close to 87 degrees, the stopper portion 38 is brought into contact with a lower edge portion 39c of the tip end portion 39a in the latch portion 39 at an edge portion 38c on the side opposite to the edge portion 38b.

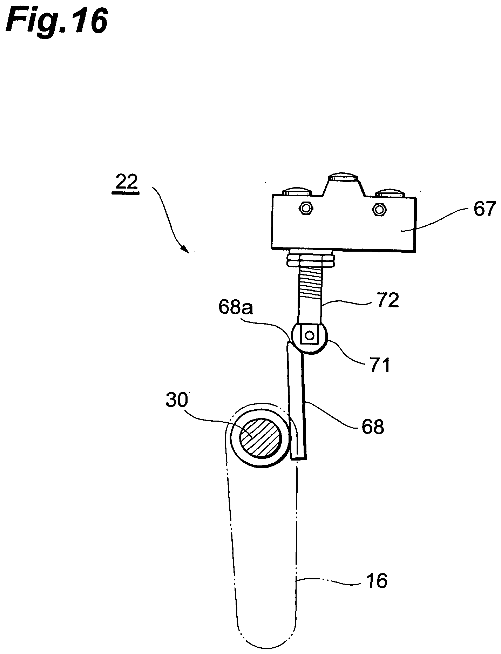

Also, by rotating the operation lever 16 clockwise, the operating plate 68 is rotated clockwise around the second rotating shaft 30 from the state horizontally extended as shown in Fig. 13. As shown in Fig. 16, when the rotation angle of the operation lever 16 comes close to 87 degrees, the slant surface of the tip end portion 68a of the operating plate 68 is brought into contact with the roller 71 of the limit switch 67 and presses the follower body 72 upward. The limit switch 67 detects that the follower body 72 is pressed and transmits a detection signal to the crew compartment. In this way, when the opening/closing cover 14 is opened, the fact is detected by the limit switch 67 and transmitted to the crew compartment. Therefore, the crew members can recognize that the opening/closing cover 14 has been opened.

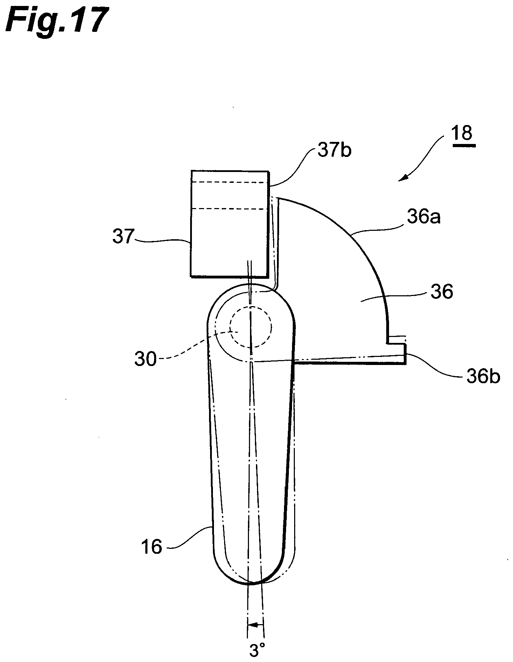

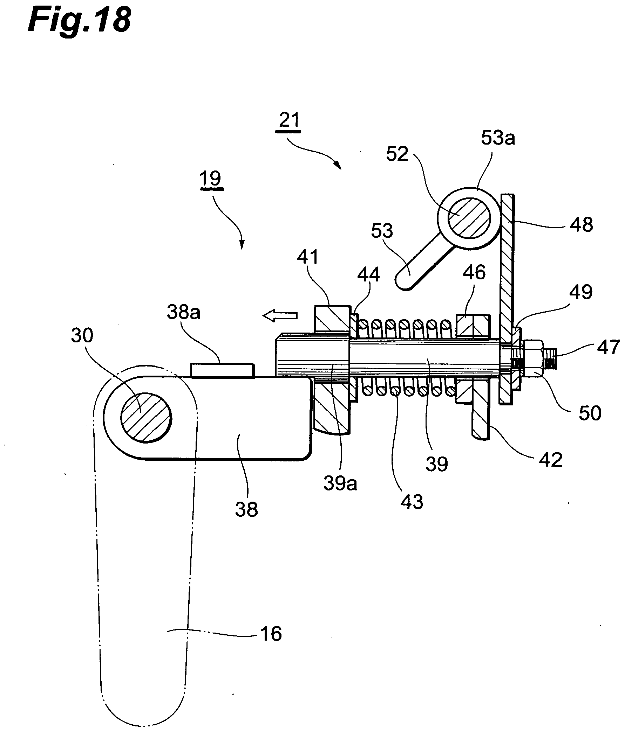

Moreover, as shown in Fig. 17, when the operation lever 16 is rotated more than 87 degrees, the cam 36 is completely separated from the cam follower 37. As shown in Fig. 18, when the rotation angle of the operation lever 16 exceeds 87 degrees, since the stopper portion 38 has passed the latch portion 39, the latch portion 39 does not receive pressing any more but is returned by urging of the compression spring 43. As a result, even if the operation lever 16 is to be rotated backward, the reverse rotation of the stopper portion 38 is blocked by the latch portion 39, and the operation lever 16 can not be returned to the original state. In this way, once the opening/closing cover 14 is opened, even if the operation lever 16 was operated unnecessarily, the opening/closing cover 14 can not be returned, and the opening/closing cover 14 maintains the open state, by which an evidence remains that the opening/closing cover 14 was opened.

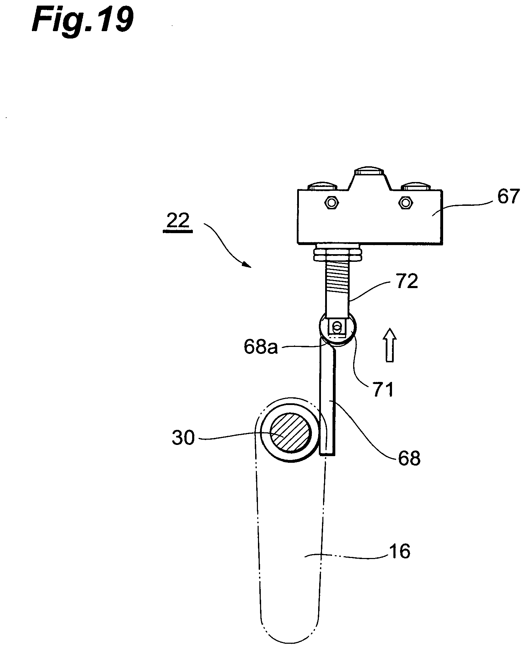

Also, as shown in Fig. 19, when the operation lever 16 is rotated exceeding 87 degrees, the operating plate 68 is further rotated clockwise and pushes up the roller 71 of the limit switch 67 and the follower body 72. During this period, the limit switch 67 keeps on sending a detection signal indicating that the operation lever 16 is being operated to the crew compartment.

As described above, when the operation lever 16 is rotated 87 degrees and more, the cam follower 37 is disengaged from the cam 36 as shown in Fig. 6, and the first rotating shaft 23 is rotated by urging of the torsion spring 28. By the rotation of the first rotating shaft 23, the cam follower 37 is inclined backward, and the opening/closing cover 14 is left open. Also, the stopper portion 38 fixed to the second rotating shaft 30 remains locked by the latch portion 39, and the operation lever 16 is locked.

Next, operation to release the locked state of the operation lever 16 by the locking mechanism 19 using the lock release mechanism 21 will be described.

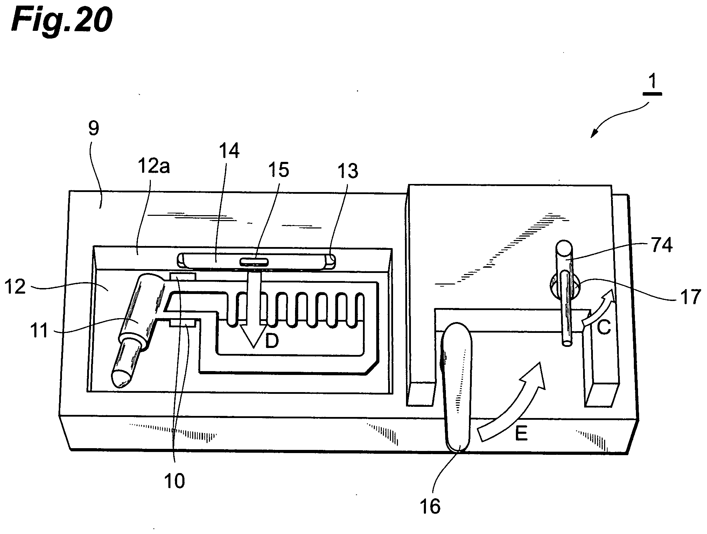

As shown in Fig. 20, a special wrench 74 is used to operate the lock release mechanism 21. A head of the special wrench 74 is in a special shape different from a head of a normal wrench, and a normal wrench can not rotate the third rotating shaft 52.

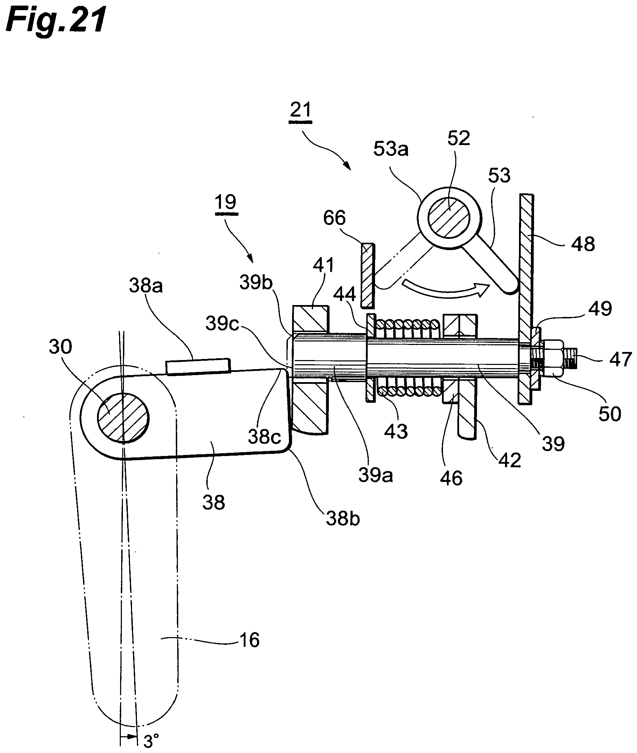

First, as shown in Fig. 20, the head of the special wrench 74 is set to the wrench insertion slot 17, and the special wrench 74 is rotated by about 90 degrees counterclockwise (arrow C direction). Then, as shown in Fig. 21, the third rotating shaft 52 and the arm 53 are rotated counterclockwise. Since the arm 53 keeps on pressing the arm 48 even after it is abutted against the arm 48, the latch portion 39 fixed to the arm 48 is pushed back against the urging force by the compression spring 43. When the latch portion 39 is pushed back in this way, there is nothing to block reverse rotation of the stopper portion 38 any more. Thus, the second rotating shaft 30 having the stopper portion 38 fixed thereto starts reverse rotation by the urging force of the torsion spring 35.

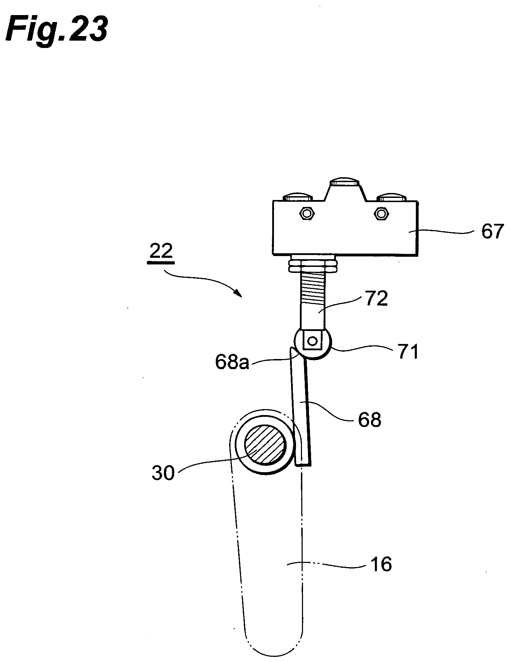

However, since the cam 36 fixed to the second rotating shaft 30 is abutted against the engaging surface 37b of the cam follower 37, the rotation of the second rotating shaft 30 stops in three degrees. At this time, the stopper portion 38 fixed to the second rotating shaft 30 is also rotated counterclockwise by three degrees and stops, but as shown in Fig. 21, since projecting of the latch portion 39 is blocked by the tip end of the stopper portion 38, the release state is maintained. At this time, as shown in Fig. 23, the operating plate 68 is still in contact with the roller 71 of the limit switch 67, and the output from the limit switch 67 is still being sent to the crew compartment.

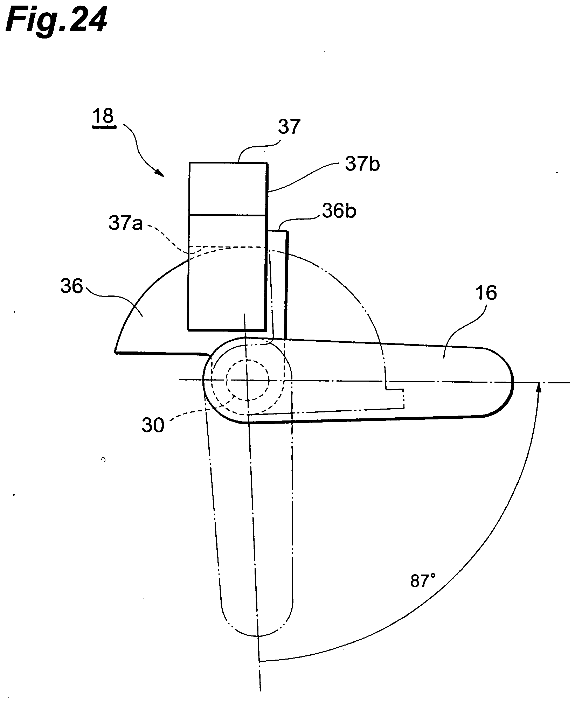

After that, as shown in Fig. 20, the knob hole 15 of the opening/closing cover 14 is pinched by fingers, and the opening/closing cover 14 is pulled in the arrow D direction. Then, since the first rotating shaft 23 is rotated in the same direction as the opening/closing cover 14, the cam follower 37 is also rotated in the same rotating direction. And the engaging surface 37b of the cam follower 37 is abutted against the cam 36, and the cam follower 37 is raised perpendicularly, and finally, the cam 36 is released from the cam follower 37. Then, as shown in Fig. 24, the second rotating shaft 30 to which the cam 36 is fixed is forcedly rotated counterclockwise when seen from the operation lever 16 side by the urging force of the torsion spring 35. Accompanied with that, the operation lever 16 and the cam 36 are also rotated counterclockwise so as to return the opening/closing cover 14 to the closed state.

When the opening/closing cover 14 is returned to the closed state in this way, as shown in Fig. 12, the stopper portion 38 fixed to the second rotating shaft 30 is also returned to the perpendicularly raised state. And as shown in Fig. 13, the operating plate 68 is also separated from the roller 71 of the limit switch 67 and returned to the horizontally extended state.

In this way, since the special wrench 74 is required for releasing by the lock release mechanism 21, release of the lock state is disabled against passengers without the special wrench 74, and the evidence that the opening/closing cover 14 was opened can not be concealed.

A preferred embodiment of the present invention has been described in detail, but it is needless to say that the present invention is not limited to the above preferred embodiment. For example, in the above preferred embodiment, the emergency tool container 1 is installed in the railway vehicle 2, but it may be installed in public facilities such as a bus, assembly hall, airport, etc. Also, in the above preferred embodiment, the emergency tool container 1 accommodates the hammer 11 for emergency evacuation, but it may accommodate other emergency tools such as a fire extinguisher, emergency ladder, etc. Also, the opening/closing cover 14 partially covering the hammer 11, which is an emergency tool, is preferably painted in conspicuous color outstanding in the surroundings at an emergency, in red, for example. By this, visibility of a place where the hammer 11 is stored is further improved.

### Industrial Applicability

As a preferred embodiment of the present invention has been described so far, according to the present invention, the opening/closing cover is hardly opened even if the operation lever is unnecessarily operated.

## Claims

1. An emergency tool container (1) for accommodating an emergency tool, comprising:
an opening/closing cover (14) fixed to a first rotating shaft (23); an operation lever (16) interlocked with the first rotating shaft (23);
**characterized by**
an interlocking mechanism (18) for blocking rotation of the first rotating shaft (23) thereby preventing opening of said cover (14) till an operation amount of the operation lever (16) reaches a predetermined amount.

2. The emergency tool container (1) according to claim 1, wherein the interlocking mechanism (18) includes:
a fan-shaped cam (36) which is fixed to a second rotating shaft (30) extending from the operation lever (16) and has an arc-shaped cam profile formed substantially concentrically with the axis of the second rotating shaft; and
a cam follower (37) which is fixed to the first rotating shaft (23) and follows the cam (36) in sliding contact with the cam profile of the cam.

3. The emergency tool container (1) according to claim 2, further comprising a locking mechanism (19), which includes:
a stopper portion (38) fixed to the second rotating is shaft (30);
a latch portion (39) which has a tip end portion thereof arranged in a rotational movement range of the stopper portion (38) and is urged so as to be capable of being pushed back toward the second rotating shaft (30).

4. The emergency tool container (1) according to claim 3, further comprising a lock release mechanism (21), which includes:
a third rotating shaft (52) with a wrench insertion slot (17) formed at a tip end;
a first arm (53) which is fixed to the third rotating shaft (52) and projects in a perpendicular direction to the axis of the third rotating shaft; and
a second arm (48) which is fixed to the latch portion (39) so as to be abutted against the first arm (53) within a rotational movement range of the first arm and pushes back the latch portion (39) when being pressed by the first arm rotated with rotation of the third rotating shaft.

5. The emergency tool container (1) according to any one of claims 1 to 4, further comprising a detecting means (22) for detecting that the operation amount of the operation lever (16) has reached a predetermined amount.

6. The emergency tool container (1) according to any one of claims 1 to 5, wherein the opening/closing cover (14) has a size partially covering the emergency tool.

## Patentansprüche

1. Notwerkzeugbehälter (1) zur Aufnahme eines Notwerkzeugs, umfassend:
eine Abdeckung (14) zum Öffnen/Schließen, die an einer ersten Drehwelle (23) befestigt ist;
einen Betätigungshebel (16), der mit der ersten Drehwelle (23) in Eingriff steht;
**gekennzeichnet durch**
einen Verriegelungsmechanismus (18) zum Blockieren der Drehung der ersten Drehwelle (23), um dadurch das Öffnen der Abdeckung (14) zu verhindern, bis eine Betätigungsgröße des Betätigungshebels (16) eine vorgegebene Größe erreicht.

2. Notwerkzeugbehälter (1) nach Anspruch 1, wobei der Verriegelungsmechanismus (18) beinhaltet:
einen fächerförmigen Nocken (36), der an einer zweiten Drehwelle (30) befestigt ist, die sich von dem Betätigungshebel (16) erstreckt, und der ein bogenförmiges Nockenprofil aufweist, das im Wesentlichen konzentrisch mit der Achse der zweiten Drehwelle ausgebildet ist; und
ein Kurvenfolgeglied (37), das an der ersten Drehwelle (23) befestigt ist und dem Nocken (36) folgt und in Gleitkontakt mit dem Nockenprofil des Nockens steht.

3. Notwerkzeugbehälter (1) nach Anspruch 2, des Weiteren umfassend einen Sperrmechanismus (19), der beinhaltet:
einen Anschlagabschnitt (38), der an der zweiten Drehwelle (30) befestigt ist; und
einen Rastenabschnitt (39), der einen Spitzenendabschnitt aufweist, der in einem Drehbewegungsbereich des Anschlagsabschnitts (38) angeordnet ist und solcherart bewegt wird, dass er nach hinten in Richtung der zweiten Drehwelle (30) zurückgeschoben werden kann.

4. Notwerkzeugbehälter (1) nach Anspruch 3, des Weiteren umfassend einen Entriegelungsmechanismus (21), der beinhaltet:
eine dritte Drehwelle (52) mit einem Schraubenschlüssel-Einsetzschlitz (17), der an einem Spitzenende ausgebildet ist;
einen ersten Arm (53), der an der dritten Drehwelle (52) befestigt ist und in einer Richtung lotrecht zu der Achse der dritten Drehwelle vorsteht; und
einen zweiten Arm (48), der an dem Rastenabschnitt (39) befestigt ist, so dass er an dem ersten Arm (53) in einem Drehbewegungsbereich des ersten Arms anliegt und den Rastenabschnitt (39) zurückdrückt, wenn er von dem ersten Arm mit der Drehung der dritten Drehwelle angeschoben wird.

5. Notwerkzeugbehälter (1) nach einem der Ansprüche 1 bis 4, des Weiteren umfassend ein Ermittlungsmittel (22) zum Ermitteln, ob die Betätigungsgröße des Betätigungshebels (16) eine vorgegebene Größe erreicht hat.

6. Notwerkzeugbehälter (1) nach einem der Ansprüche 1 bis 5, wobei die Abdeckung (14) zum Öffnen/Schließen eine Größe aufweist, die das Notwerkzeug teilweise abdeckt.

## Revendications

1. Boîte à outil d'urgence (1) destiné à recevoir un outil d'urgence, comprenant:
un capot d'ouverture/fermeture (14) fixé à un premier arbre rotatif (23);
un levier de commande (16) solidaire du premier arbre rotatif (23); **caractérisé par**:
un mécanisme de solidarisation (18) pour bloquer la rotation du premier arbre rotatif (23), empêchant ainsi l'ouverture dudit capot (14) jusqu'à ce que le levier d'actionnement (16) de verrouillage atteigne un degré prédéterminé.

2. Boîte à outil d'urgence (1) selon la revendication 1, dans lequel le mécanisme de solidarisation (1) comprend:
une came en forme d'éventail (36) qui est fixée à un second arbre rotatif (30) partant du levier d'actionnement (16) et présente un profil de came en forme d' arc conçue de manière sensiblement concentrique avec l'axe du second arbre de rotation; et
un suiveur de came (37) qui est fixé au premier arbre rotatif (23) et suit la came (36) en contact glissant avec le profil de came de la came.

3. Boîte à outil d'urgence (1) selon la revendication 2, comprenant en outre un mécanisme de verrouillage (19), qui inclut:
une partie butée (38) fixée au deuxième arbre rotatif (30); et
une partie loquet (39) qui comporte une partie d'extrémité de pointe de celle-ci disposée dans une plage de mouvement de rotation de la partie butée (38) et qui rapprochée de force vers le second arbre de rotation (30) et ce dernier la repousse.

4. Boîte à outil d'urgence (1) selon la revendication 3, comprenant en outre un mécanisme de libération de verrouillage (21), qui inclut:
un troisième arbre rotatif (52) avec une fente d'insertion de clé (17) formée à une extrémité de pointe;
un premier bras (53) qui est fixé au troisième arbre rotatif (52) et fait saillie dans une direction perpendiculaire à l'axe du troisième arbre rotatif; et
un deuxième bras (48) qui est fixé à la partie loquet (39) de manière à venir en butée contre le premier bras (53) dans une plage de mouvement de rotation du premier bras et repousse la partie loquet (39) en cas de compression par le premier bras mise en rotation par la rotation du troisième arbre de rotation.

5. Boîte à outil d'urgence (1) selon l'une quelconque des revendications 1 à 4, comprenant en outre un moyen de détection (2) pour détecter que le degré d'actionnement du levier d'actionnement (16) a atteint un degré prédéterminé.

6. Boîte à outil d'urgence (1) selon l'une quelconque des revendications 1 à 5, dans lequel le capot d'ouverture/fermeture (14) a une taille recouvrant partiellement l'outil d'urgence.
